# EUROPÄISCHE PATENTANMELDUNG

(11) **EP 1 013 539 A2**
(43) Veröffentlichungstag der Anmeldung: **28.06.2000**
(21) Anmeldenummer: 99118000.1
(22) Anmeldetag: 20.09.1999
(51) Int. Cl.: B62D 33/067

(54) **Kabinenaufhängung für Nutzfahrzeuge**

(30) Priorität: 23.12.1998 DE 19859915
(71) Anmelder: CARL DAN. PEDDINGHAUS GMBH & CO. KG, 58256 Ennepetal (DE)
(72) Erfinder: Kerber, Michael, 58675 Hemer (DE); Breuer, Heinz Werner, 58256 Ennepetal (DE)
(74) Vertreter: HOFFMANN - EITLE

(57) **Zusammenfassung**

Kabinenaufhängung für Nutzfahrzeuge zur Befestigung eines kippbar auf einem Fahrzeugrahmen gelagerten Fahrerhauses umfassend eine Querstabilisatorstange (12), an deren entgegengesetzten Enden jeweils ein Längslenker (11) befestigt ist, eine Einrichtung zur Anbringung eines Lagerzapfens der Kabine und eine Aufnahme für eine Federdämpfung. Die Einrichtung zur Anbringung des Lagerzapfens (15) und die Aufnahme für die Federdämpfung (17) sind einstückig mit dem Längslenker als Schmiedeteil ausgebildet.

## Beschreibung

### Gebiet der Erfindung

Die Erfindung betrifft eine Kabinenaufhängung für Nutzfahrzeuge zur Befestigung eines kippbar auf einem Fahrzeugrahmen gelagerten Fahrerhauses.

Bei Lastkraftwagen oder ähnlichen schweren Fahrzeugen mit Frontlenker ist das Fahrerhaus oberhalb des gesondert am Fahrzeugrahmen befestigten Antriebsaggregats des Fahrzeugs angeordnet. Der vordere Teil des Fahrerhauses ist gewöhnlich federnd auf dem Rahmen gelagert. Um eine bequeme Zugänglichkeit bei Wartungs- und Reparaturarbeiten am Antriebsaggregat zu gewährleisten, ist das Fahrerhaus in der Regel kippbar relativ zum Fahrzeugrahmen angeordnet. Die Achse, um die sich das Fahrerhaus nach vorn kippen läßt, liegt in der Nähe der Federvorrichtung.

Die Kabinenaufhängung für Nutzfahrzeuge dient dazu, das Abkippen des Fahrerhauses nach vorne sicherzustellen. Naturgemäß ist weiterhin die Erfüllung bestimmter Sicherheitsstandards Voraussetzung und die durch die Verwendung von Chassis und Fahrerhaus entstehende Torsionsbelastung muß von der Kabinenaufhängung aufgenommen werden. Letztlich dient die Kabinenaufhängung auch dazu, mittels einer entsprechenden Lagerung auch den Komfortansprüchen der Benutzer zu genügen.

### Stand der Technik

In der Technik sind Lagerungen für das kippbare Fahrerhaus von Nutzfahrzeugen, bei denen das Fahrerhaus um ein Lager in bezug auf den Fahrzeugrahmen schwenkbar ist, gut bekannt. Das System umfaßt eine Querstabilisatorstange, an deren axialen Enden jeweils ein Längslenker verdrehsicher befestigt ist. Zudem ist eine drehbar gelagerte Stütze in Form eines Lagerzapfens angeordnet und eine Aufnahme für die Federdämpfung am axialen Endteil des Drehstabs vorgesehen.

In der deutschen Offenlegungsschrift DE 43 42 8099 A1 ist eine Kabinenaufhängung beschrieben, bei welcher der Lagerzapfen erst bei der Montage durch ein geeignetes Befestigungselement relativ zum Stabilisator gegen axiale Bewegungen gesichert wird.

Auch in der europäischen Patentanmeldung EP 0 798 198 A1 wird eine Lagerung eines kippbaren Fahrerhauses eines Lastkraftwagens beschrieben. Das Fahrerhaus ist darin über das vordere Ende einer an der Querstabilisatorstange schwenkbar befestigten Konsole angelenkt. Die Lage des Fahrerhauses und der Federdämpferbeine ist gegenüber dem Fahrgestellrahmen über die Querstabilisatorstange durch zwei Längslenker stabilisiert.

Solche Systeme sind im Serieneinsatz und haben sich offensichtlich bewährt. Aufgrund des Aufbaus aus relativ vielen Einzelteilen erfordern diese Systeme jedoch einen entsprechend großen Bauraum und sind vergleichsweise teuer. Außerdem steigt der Montageaufwand ebenfalls mit der Zahl der Bauteile.

### Darstellung der Erfindung

Der Erfindung liegt die Aufgabe zugrunde, eine Kabinenaufhängung für Nutzfahrzeuge vorzuschlagen, die eine einfache Montage der Fahrerkabine an den Chassis ermöglicht und sowohl raumsparend als auch möglichst kostengünstig ist, sowie gewisse Sicherheitsaspekte berücksichtigt.

Diese Aufgabe wird durch eine Kabinenaufhängung für Nutzfahrzeuge mit den Merkmalen des Anspruchs 1 gelöst.

Der Erfindung liegt der Gedanke zugrunde, daß das in der Technik übliche, drei einzelne Bauteile umfassende System aus Längslenker, Einrichtung zur Anbringung eines Lagerzapfens der Kabine und Aufnahme für eine Federdämpfung durch ein einstückiges, geschmiedetes Bauteil ersetzt werden kann. Die einteilige Bauweise bietet den Vorteil, daß die reduzierte Menge von Einzelteilen die Montage erleichtert und kostengünstig gestaltet. Das im Schmiedeverfahren hergestellte einteilige Bauteil ist zudem kostengünstig zu realisieren. Die einstückige Ausführung des Bauteils ist ferner raumsparend und ermöglicht es in Verbindung mit der Herstellung im Schmiedeverfahren, gewisse Sicherheitsaspekte zu berücksichtigen. So können die Längslenker gekrümmt ausgebildet werden und sich im Crashfall entsprechend einer stärkeren Mittelteilkrümmung energieverzehrend verformen. Alternativ dazu können auch andere stoßaufnehmenden Teile angebracht werden. Schließlich ist die erfindungsgemäße Kabinenaufhängung gegenüber der herkömmlichen Bauweise gewichtssparend.

Vorteilhafte Ausführungsformen sind durch die übrigen Ansprüche gekennzeichnet.

Nach einer vorteilhaften Ausführungsform ist die Querstabilisatorstange an den äußeren Enden abgewinkelt ausgebildet. Diese Ausführungsform besitzt den Vorteil, daß die Längslenker die Querstabilisatorstange über die ganze Länge der Länglenker unterstützen und führen können. Ferner müssen die Längslenker in dieser Ausführungsform keine Aussparungen zur Befestigung der Querstabilisatorstange aufweisen, sondern können mit ihr über eine Schraubverbindung verbunden werden.

Nach einer vorteilhaften Ausführungsform ist die Querstabilisatorstange an den abgewinkelten Armen mit den Längslenkern durch verschraubte Blechschellen befestigt. Blechschellen sind ein billiges, einfach zu montierendes Standardbauteil, das eine Führung für die Querstabilisatorstange beinhaltet. Bei einer Ausführung mit jeweils vier Schrauben wird das Verdrehen der Einzelteile gegeneinander verhindert.

Vorteilhafterweise besitzen die Längslenker jeweils zwei Schenkel zur Führung der Querstabilisatorstange. Diese Führungsschenkel bieten einen zusätzlichen Schutz gegen Verdrehen der Querstabilisatorstange gegenüber den Längslenkern und tragen zusätzlich zur Abstützung der Querstabilisatorstange bei.

Nach einer bevorzugten Ausführungsform ist die Querstabilisatorstange als stabiles Stahlrohr ausgebildet. neben einer Gewichtsersparnis gegenüber einer Querstabilisatorstange aus Vollmaterial, was letztlich zu einer Reduktion des Kraftstoffverbrauchs führt, bietet dies den Vorteil, daß die Querstabilisatorstange somit durch ein kostengünstiges Standardbauteil realisiert ist.

Vorzugsweise ist die in das Schmiedeteil integrierte Aufnahme für die Federdämpfung als Lagerauge ausgebildet. Dies bietet den Vorteil, daß handelsübliche Federdämpfer verwendbar sind.

Vorteilhafterweise ist der Längslenker mit Lagerzapfen und Lagerauge für die Federdämpfung aus mikrolegiertem Stahl geschmiedet. Hierdurch vermindert sich der Verschleiß und es erhöht sich die Lebensdauer des Längslenkers. Dies führt zu einer Verringerung der anfallenden Wartungsarbeit bzw. Reparaturarbeit. Außerdem ist die Herstellung der Längslenker im Schmiedeverfahren unaufwendig.

Nach einer bevorzugten Ausführungsform sind an den Enden der Querstabilisatorstange geräuschdämpfende Kappen aus Kunststoff angebracht. Diese Kappen, die unerwünschte und lästige Geräusche verringern, werden über die Enden des Drehstabs geschoben und erhöhen so ohne großen Aufwand oder Gewichtssteigerung den Komfort.

Vorteilhafterweise ist die Querstabilisatorstange mit den Längslenkern verschweißt. Diese Ausführung gewährleistet ein verdrehsicheres und haltbares Zusammenfügen der Querstabilisatorstange mit den Längslenkern.

Bei einer Ausführungsform ohne abgewinkelte Arme besteht die Querstabilisatorstange vorzugsweise aus einem aufgestauchen Stahlrohr. Neben der durch das Rohr gegenüber der Vollversion erzielten Gewichtsersparnis bietet diese Ausführungsform den Vorteil, daß sich die Festigkeit der Querstabilisatorstange gegenüber einer nicht aufgestauchten Version erhöht.

Weist die Querstabilisatorstange nicht zwei symmetrisch angeordnete, abgewinkelte Arme auf, so besitzen die Querstabilisatorstange und die Längslenker vorzugsweise Zentrierungen zum Zusammenfügen der Bauteile ineinander. Dadurch erleichtert sich die Montage der Bauteile und es entsteht eine zusätzliche, formschlüssige Führung der Bauteile.

### Kurze Beschreibung der Zeichnungen

Nachfolgend wird die Erfindung rein beispielhaft anhand der beigefügten Figuren beschrieben, in denen:
- Fig. 1: eine Seitenansicht der Hälfte der erfindungsgemäßen Kabinenaufhängung für Nutzfahrzeuge in einer bevorzugten Ausführung mit abgewinkelter Querstabilisatorstange ist;
- Fig. 2: eine perspektivische Ansicht des geschmiedeten, erfindungsgemäßen Bauteils mit Darstellung einer Befestigungsmöglichkeit an der Querstabilisatorstange ist;
- Fig. 3: eine Seitenansicht der Hälfte der Kabinenaufhängung für Nutzfahrzeuge in einer bevorzugten Ausführungsform mit nicht abgewinkelter Querstabilisatorstange ist;
- Fig. 4: eine Darstellung der bevorzugten Schweißverbindung zwischen nicht abgewinkelter Querstabilisatorstange und geschmiedetem Längslenker, Einrichtung zur Anbringung eines Lagerzapfens der Kabine und Aufnahme für eine Federdämpfung ist; und
- Fig. 5: eine Seitenansicht des geschmiedeten, erfindungsgemäßen Bauteils in einer bevorzugten Ausführungsform zur Verbindung mit einer nicht abgewinkelten Querstabilisatorstange ist.

### Wege zur Ausführung der Erfindung

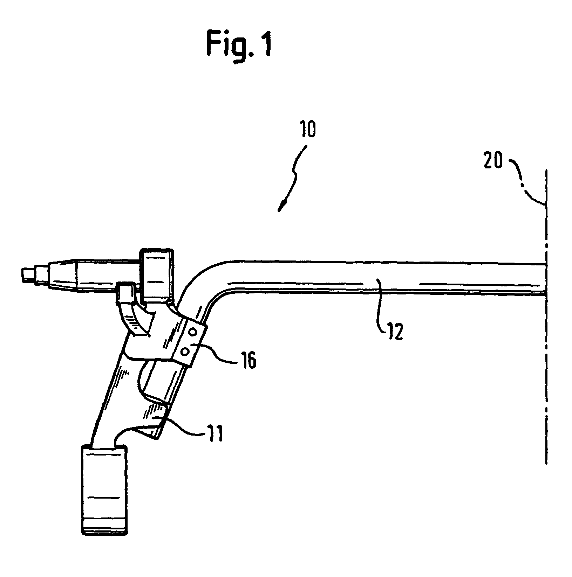

In Fig. 1 ist ein Teil der Aufhängung für eine Kabine von Nutzfahrzeugen eines kippbar auf einem Fahrzeugrahmen gelagerten Fahrerhauses dargestellt. Die zweite, nicht dargestellte Hälfte ist achsensymmetrisch bezüglich der Achse 20 zum dargestellten Teil aufgebaut.

Die Kabinenaufhängung für Nutzfahrzeuge umfaßt vorzugsweise neben einer Querstabilisatorstange 12 ein geschmiedetes Bauteil 11, das die Funktion eines Längslenkers, einer Einrichtung zur Anbringung eines Lagerzapfens der Kabine und einer Aufnahme für eine Federdämpfung in sich vereinigt. Am anderen Ende der Querstabilisatorstange 12 ist ein entsprechendes (nicht dargestelltes) spiegelsymmetrisches Schmiedeteil angebracht. Bei allen hierzu gezeigten Ausführungsformen ist die Querstabilisatorstange 12 entweder aus Vollmaterial oder aber im Fall einer gewünschten Gewichtsreduzierung, als Rohr ausgebildet. Die zu verwendenden Materialien richten sich nach der jeweiligen Beanspruchung des Systems und können regulären Baustahl wie auch höher legierter Federstahl umfassen.

Die in Fig. 1 dargestellte, bevorzugte Ausführungsform der Querstabilisatorstange 12 besitzt an beiden Enden abgewinkelte Arme. An diesen abgewinkelten Armen wird der Längslenker des Schmiedeteils 11 mittels einer Blechschelle 16 befestigt.

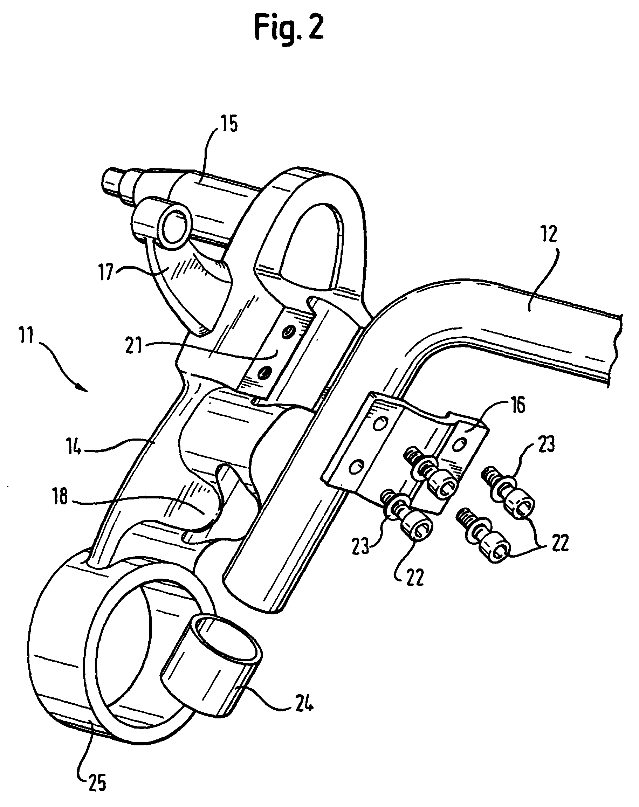

Wie am besten aus Fig. 2 ersichtlich ist, wird die Blechschelle 16 mittels vier Schrauben 22 und zugehörigen Beilagscheiben 23 am Schmiedeteil befestigt. Am Schmiedeteil 11 sind hierfür Anlageflächen 21 vorgesehen, zwischen denen der Arm der Querstabilisatorstange 12 geführt wird.

Aus Abbildung 2 ist ferner zu entnehmen, daß das Schmiedeteil 11 zur Führung der Querstabilisatorstange 12 zwei zusätzliche Führungszapfen 18 aufweist. Dadurch ist die Querstabilisatorstange 12 gegenüber dem Schmiedeteil 11 zusätzlich gegen Verdrehen um eine Achse senkrecht zur Achse 20 gesichert.

Um lästige Geräuschentwicklungen an dieser Stelle zu minimieren, werden über die Querstabilisatorstange 12 an deren Enden jeweils Kunststoffkappen 24 aufgesetzt.

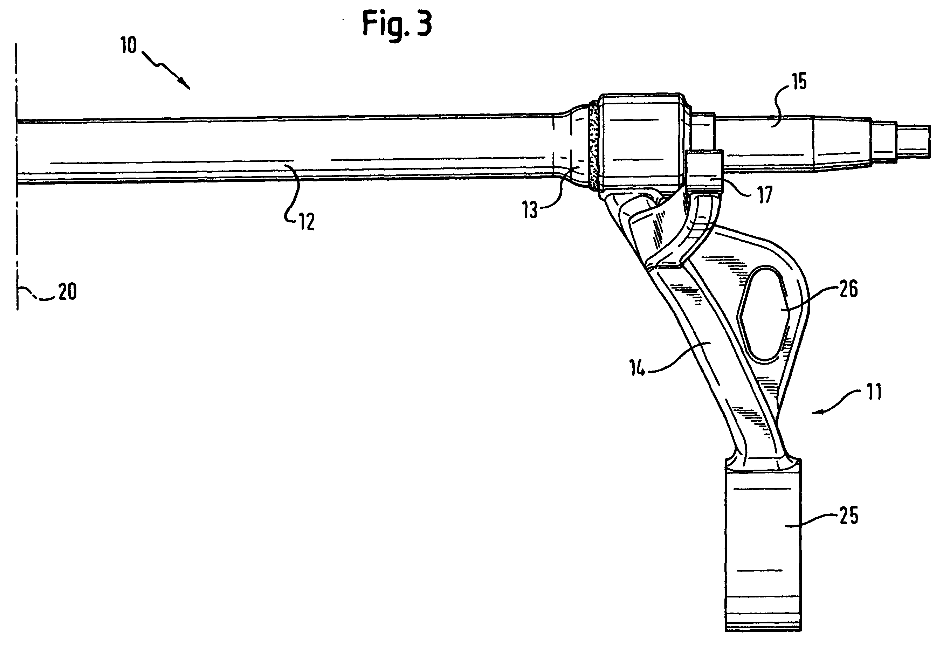

Eine andere, bevorzugte Ausführungsform zeigt Fig. 3. In dieser Figur ist wiederum nur die Hälfte der Querstabilisatorstange 12 dargestellt und entsprechend nur das am sichtbaren Ende angebrachte Schmiedeteil 11 gezeigt.

Die andere Hälfte der Querstabilisatorstange 12 und das dazugehörige Schmiedeteil für das andere Ende sind achsensymmetrisch bezüglich der Symmetrieachse 20 ausgebildet.

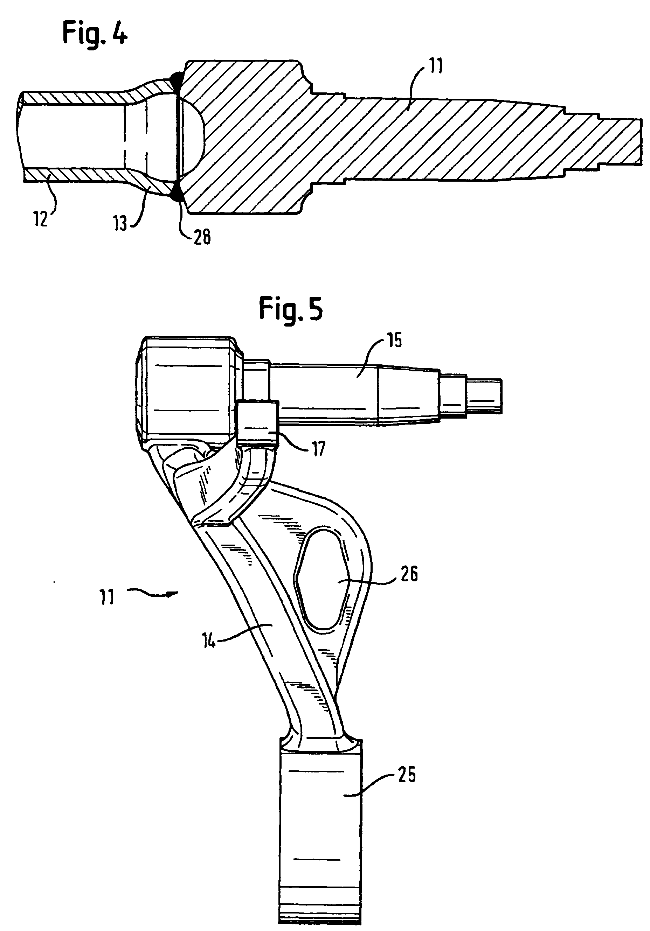

In dieser Ausführungsform ist die Querstabilisatorstange 12 vorzugsweise als gerades Rohr, das an den Enden 13 aufgestaucht ist, ausgebildet. Dieses aufgestauchte Stahlrohr 12 wird an seinem Ende 13 mit dem Schmiedeteil 11 durch eine Schweißverbindung 28, wie sie in Abb. 4 dargestellt ist, drehbar verbunden. Durch den Aufstauchungsprozeß wird eine größere Umfangslänge erhalten und damit auch eine längere Schweißnaht. Damit wird die Festigkeit der Schweißverbindung Stahlrohr/Schwinge erhöht.

Um die Montage zu vereinfachen und eine leichte Zentrierung zu ermöglichen, kann an den Schmiedeteilen 11 zusätzlich eine Zentrierung für die Querstabilisatorstange 12 vorgesehen werden (nicht dargestellt).

In Fig. 5 sind die einzelnen Komponenten des Schmiedeteils 11 am besten zu erkennen. Der Längslenker 14 endet an seinem einen Ende in einer Aufnahme für ein Gummilager 25 und stellt über Achsen und Gegenstücke die Verbindung zum Fahrerhaus dar (nicht dargestellt). Am anderen Ende des Längslenkers 14 ist ein Zapfen 15 für die Lagerung am Chassis mit angeschmiedet. Ebenfalls mit angeschmiedet ist eine Aufnahme für eine Federdämpfung 17, die als Lagerauge ausgebildet ist. Das ermöglicht die Aufnahme herkömmlicher Federdämpfungssysteme.

Das dargestellte Bauteil 11 wird bei der Herstellung einstückig geschmiedet und anschließend im Bereich des Lagerzapfens 15, der Aufnahme für das Gummilager 25 und der Aufnahme für die Federdämpfung 17 mechanisch bearbeitet.

In Fig. 5 ist ferner eine bevorzugte Ausführungsform für den Längslenker 14 zu erkennen. So ist im Bereich des Längslenkers 14 eine Aufnahme für einen Reibgummi 26 vorgesehen. Zusammen mit der geschwungenen Bauweise des Längslenkers 14 absorbiert ein Reibgummi (nicht dargestellt) bei einem etwaigen Aufprall einen Teil der hierbei frei werdenden Energien. Damit wird die Sicherheit für den Fahrer erhöht.

Im Unterschied zu herkömmlichen Systemen ist bei Verwendung des erfindungsgemäßen Bauteils die Anzahl der zu montierenden Elemente für eine Kabinenaufhängung für Nutzfahrzeuge reduziert. Dennoch muß beim erfindungsgemäßen Bauteil nicht auf Sicherheitsstandards verzichtet werden.

Der wesentliche Aspekt der erfindungsgemäßen Kabinenaufhängung für Nutzfahrzeuge liegt darin, daß die Anzahl von Bauteilen verringert werden konnte. Zusätzlich wurde die Kabinenaufhängung hinsichtlich des Gewichts optimiert. Dadurch ergeben sich sowohl im Betrieb als auch bei der Montage reduzierte Kosten, da der Kraftstoffverbrauch gesenkt wird und die Zuverlässigkeit des Bauteils gegenüber einer Lösung aus mehreren Einzelkomponenten erhöht wird. Darüber hinaus erleichtert sich die Montage der Kabinenaufhängung für Nutzfahrzeuge.

## Patentansprüche

1. Kabinenaufhängung für Nutzfahrzeuge zur Befestigung eines kippbar auf einem Fahrzeugrahmen gelagerten Fahrerhauses, umfassend:
- eine Querstabilisatorstange (12), an deren entgegengesetzten Enden jeweils ein Längslenker (11) befestigt ist;
- eine Einrichtung zur Anbringung eines Lagerzapfens der Kabine (15); sowie
eine Aufnahme für eine Federdämpfung (17),
dadurch gekennzeichnet, daß
die Einrichtung zur Anbringung des Lagerzapfens (15) und die Aufnahme für die Federdämpfung (17) einstückig mit dem Längslenker (11) als Schmiedeteil ausgebildet sind.

2. Kabinenaufhängung nach Anspruch 1, dadurch gekennzeichnet, daß die Querstabilisatorstange (12) zwei symmetrisch angeordnete, abgewinkelte Arme aufweist.

3. Kabinenaufhängung nach Anspruch 1 und 2, dadurch gekennzeichnet, daß die Querstabilisatorstange (12) an den abgewinkelten Armen mit den Längslenkern (11) durch verschraubte Blechschellen (16) befestigt ist.

4. Kabinenaufhängung nach einem oder mehreren der Ansprüche 2 und 3, dadurch gekennzeichnet, daß die Längslenker (11) jeweils zwei Schenkel (18) zur Führung der Querstabilisatorstange (12) besitzen.

5. Kabinenaufhängung nach einem oder mehreren der vorhergehenden Ansprüche, dadurch gekennzeichnet, daß die Querstabilisatorstange (12) als Stahlrohr ausgebildet ist.

6. Kabinenaufhängung nach einem oder mehreren der vorhergehenden Ansprüche, dadurch gekennzeichnet, daß die Aufnahme für die Federdämpfung (17) als Lagerauge ausgebildet ist.

7. Kabinenaufhängung nach einem oder mehreren der vorhergehenden Ansprüche, dadurch gekennzeichnet, daß die Längslenker (11) mit Lagerzapfen (15) und Aufnahme für die Federdämpfung (17) aus mikrolegiertem Stahl geschmiedet sind.

8. Kabinenaufhängung nach einem oder mehreren der vorhergehenden Ansprüche, dadurch gekennzeichnet, daß an den Enden der Querstabilisatorstange (12) geräuschdämpfende Kappen aus Kunststoff (24) angebracht sind.

9. Kabinenaufhängung nach einem oder mehreren der Ansprüche 1 und 5-8, dadurch gekennzeichnet, daß eine nicht abgewinkelte Querstabilisatorstange (12) so mit den Längslenkern (11) verschweißt ist, daß die Achse der Querstabilisatorstange (12) mit der Achse der Lagerzapfen (15) fluchtet.

10. Kabinenaufhängung nach einem oder mehreren der Ansprüche 1 und 5-9, dadurch gekennzeichnet, daß die Querstabilisatorstange (12) aus einem aufgestauchten Stahlrohr besteht.

11. Kabinenaufhängung nach einem oder mehreren der Ansprüche 1 und 5-10, dadurch gekennzeichnet, daß die Querstabilisatorstange (12) und die Längslenker (11) Zentrierungen zum Zusammenfügen der Bauteile besitzen.
